(19)

**Europäisches Patentamt**

**European Patent Office**

**Office européen des brevets**

(11)  **EP 3 703 209 B1**

(12)  # EUROPEAN PATENT SPECIFICATION

(45) Date of publication and mention of the grant of the patent:
**17.08.2022 Bulletin 2022/33**

(21) Application number: **19382152.7**

(22) Date of filing: **01.03.2019**

(51) International Patent Classification (IPC):
**H02H 3/42** *(2006.01)*     **H02H 7/26** *(2006.01)*

(52) Cooperative Patent Classification (CPC):
**H02H 7/26; H02H 3/425**

(54)  **PROTECTION METHOD OF AN ELECTRICAL DISTRIBUTION AND/OR TRANSMISSION NETWORK AGAINST SHORT-CIRCUITS**

SCHUTZVERFAHREN EINES ELEKTRISCHEN VERTEILUNGS- UND/ODER ÜBERTRAGUNGSNETZES GEGEN KURZSCHLÜSSE

PROCÉDÉ DE PROTECTION D'UN RÉSEAU DE DISTRIBUTION ET/OU DE TRANSMISSION ÉLECTRIQUE CONTRE LES COURTS-CIRCUITS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.09.2020 Bulletin 2020/36**

(73) Proprietor: **Fundación Circe - Centro de Investigacion de Recursos y Consumos Energéticos 50018 Zaragoza (ES)**

(72) Inventors:
• **MARTINEZ CARRASCO, Eduardo 50018 ZARAGOZA (ES)**
• **BORROY VICENTE, Samuel 50018 ZARAGOZA (ES)**
• **VILLEN MARTINEZ, Ma Teresa 50018 ZARAGOZA (ES)**

(74) Representative: **Isern Patentes y Marcas S.L. Avda. Diagonal, 463 Bis, 2° 08036 Barcelona (ES)**

(56) References cited:
**US-A1- 2003 086 222     US-A1- 2013 088 239**

**EP 3 703 209 B1**

## Description

The present invention relates to a protection method of an electrical distribution and/or transmission network that includes a plurality of renewable energy and conventional generators against short-circuits with current injection in the network by said electric generators.

## STATE OF THE ART

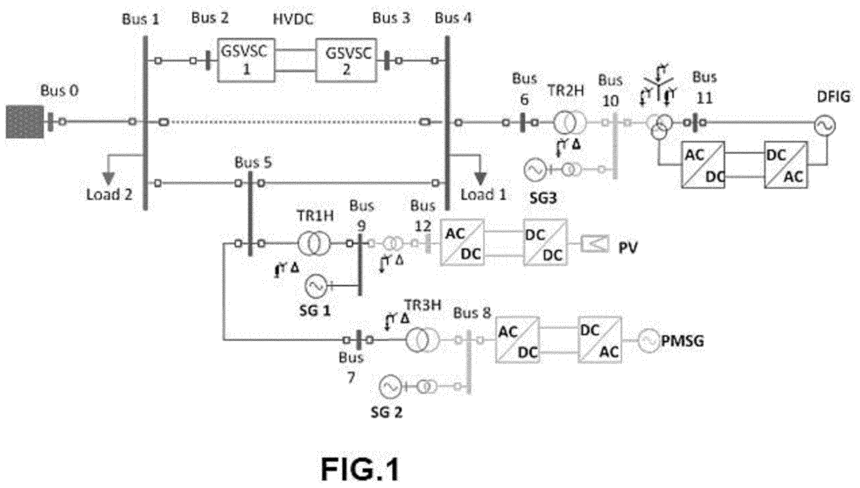

The state of the art discloses electrical networks that integrate different types of renewable energy and conventional generators, as shown in figure 1. As such, it is possible to see that the aforementioned network incorporates a type 4 wind generator with permanent magnets (PMSG-Permanent Magnet Synchronous Generator), a photovoltaic (PV) generator, a type 3 wind generator (DFIG-Doubly Fed Induction Generator), as well as high voltage direct current (HVDC) systems and a plurality of connection buses.

Tests carried out on the network shown in figure 1 revealed problems related to the directionality and the faulted phase selection for the protection of the network due to the contribution of symmetrical current of the type 4 wind generators and the photovoltaic generator in the case of asymmetrical short-circuits. This symmetrical current injection during asymmetrical short-circuits has a very different behaviour with respect to the traditional behaviour of the synchronous generators against short-circuits, which causes malfunctioning observed in present protection algorithms. These faults are due to problems in the selection of the phase in which the short-circuit takes place, as well as the detection of the directionality of said short-circuit with respect to the measurement and protection equipment.

The current injection of a wind turbine or a photovoltaic generator has four different phases: **(a)** a state prior to the short-circuit, in steady-state conditions, wherein a standard symmetrical current injection takes place during the time interval immediately before the short-circuit; **(b)** the initial short-circuit current injection, which contains positive and negative sequence current, wherein before the control system that controls the current injected by the renewable energy generator reacts to the short-circuit state, the observed behaviour for type 4 wind turbines and photovoltaic generators is similar to that of a synchronous generator, injecting positive and negative sequence current to the short-circuit; **(c)** a transition period, wherein the control action starts and progressively reduces the negative sequence current injection, and that is observed as especially problematic for the selection algorithms of faulted phases and the declaration of directionality; and **(d)** a steady state period during the short-circuit, wherein once the control has eliminated the negative sequence current injection, even though the applied short-circuit is asymmetrical, only balanced current is injected, that is, only positive sequence current is injected during this period. The transition period (c) can have different durations depending on the response speed of the implemented control system.

It has been observed that the protection relays known in the state of the art include methods for selecting a faulted phase that operate correctly during the period immediately after the start of the short-circuit, when the positive and negative sequence currents co-exist -i.e. a behaviour similar to that of a synchronous generator-. However, during the transition period, said algorithms that select the faulted phase and declare the directionality provide incorrect responses due to the type of current injected by the renewable energy generator (reduction of negative sequence current until it disappears). Once this error arises during the transition period, it is really complicated for the methods implemented in current protection relays to correctly detect the phase that is short-circuited, as well as the direction in which the short-circuit is produced.

During the transition period, the action of the generator control will lead to the suppression of the negative sequence current. Therefore, the error in the detection of the faulted phase and the error in directionality that arises during this period of time persist during stage (d), wherein the single positive sequence current injection takes place, cancelling the negative sequence current injection. As a result, the protection relay cannot provide a correct selection of the faulted phase and directionality.

Furthermore, the method of superimposed quantity algorithm is known in the state of the art, as described for example in [G. Benmouyal y J. Roberts, «Superimposed Quantities: Their True Nature and Application in Relays,» of the 26th Annual Western Protective Relay Conference, Spokane, 1999]. Documents related to the tolerance to short-circuits in relays are also known, such as WO2007086944, US2003011352, US647791, US200409317, US2005047043, US2007070565, US2003223171, US6256592, US2006077605 or US6518767.

Further documents related to the recognition of the faulted phase are US 2003/086222 and US 2013/088239. However, none of these documents describe a method with the features of the method of claim 1 which accompanies the present specification.

## DESCRIPTION OF THE INVENTION

As noted, the state of the art shows short-circuits and incorrect behaviours in the identification of the faulted phase and the directionality thereof (causing the relay to not trip, or trip incorrectly) during the injection of short-circuit current in the network by electric generators, particularly renewable energy generators and, more particularly, type 3 and type 4 wind generators and photovoltaic generators, although the present invention would be equally applicable for generators of any type with short-circuits that are identical or equivalent to those indicated for this type of generator.

The method of the invention which is defined by the appended claims, is based on the fact that it is necessary to extract information from the phase current waveforms obtained in the moments immediately after the initiation of the short-circuit and before the control of the generator starts to act, given that during these moments it has a behaviour similar to that of a synchronous generator. Therefore, an aim of the present invention is to prevent the protection methods relating to the faulted phase selection from taking data and working beyond this initial period after the start of the short-circuit given that, otherwise, it is possible that the type of faulted phases involved in this short circuit and directionality- is not correctly identified, and therefore, said short-circuit cannot be correctly solved, with the resulting risk of not being able to correctly clear a short-circuit (failure of the protection to act, late actuation or incorrect actuation) in the electrical distribution and/or transmission network. In the event of this phenomenon, the uncleared incident can compromise the stability of the electrical system.

The time interval that is considered *valid* for the detection depends on the speed of the control system linked to the generator. Therefore, an object of the invention is to provide a method that adapts to the plurality of response times of the electronic controllers implemented in the renewable energy generators. That is, a method is used that provides an adaptive time window during which the faulted phase information from two traditional criteria are assumed to be valid: **(i)** a first criterion for comparison between positive and negative sequence current; and **(ii)** a second criterion for comparison between negative and zero sequence current. In addition to these two criteria, a particular embodiment of the present invention incorporates **(iii)** a third criterion based on a variation of the settings or parameters used in the superimposed quantities criterion to consider whether there is a short-circuit in each of the phases.

Lastly, an object of the invention is to combine the different indicated criteria to increase to the robustness of the faulted phase selection and directionality indicated in the state of the art, taking into account at which moments the traditional methods are applicable and when they must be discarded by means of the use of the adaptive time window. The invention has the added value of a considerable improvement of the operation of the faulted phase selection under current injection coming from renewable energy generation with respect to the behaviour observed in the protections described in the state of the art.

All this in accordance with the method of claim 1, while the claims dependent thereon describe particular embodiments of the invention. More specifically, the protection method of an electrical distribution and/or transmission network comprising three lines or phases (A, B, C) and a neutral or ground line (G) against short-circuits during which takes place the current injection by at least one electric generator selected from among a wind generator or a photovoltaic generator; and wherein the method comprises the stages of: (a) detecting short-circuits for an initial classification of the short-circuit as line to ground, line to line and line-line to ground; (b) a stage of selecting the short-circuit; (c) a stage of selecting the faulted phase or phases; and (d) a classification stage of the faulted phase depending on the waveforms of scalar products $\Delta T_{AB}$, $\Delta T_{BC}$ and $\Delta T_{CA}$, said scalar products being defined by voltage and current in the lines or phases (A, B, C); wherein, in addition, the stage of detecting the directionality and the stage of selecting the faulted phase or phases are only valid during a period of time defined by an adaptive window that is temporarily delimited based on the number of maximums and minimums of the waveforms provided by the scalar products $\Delta T_{AB}$, $\Delta T_{BC}$ and $\Delta T_{CA}$ and the duration of which is comprised between the moment of time in which the start of the short-circuit is detected and the moment of time in which the control starts to actuate, said time interval being the interval in which the electric generator behaves synchronously; and wherein, in addition, said window is automatically adaptable to the different time responses of the control system of the renewable energy generators.

In a particular embodiment, stage (b) for identifying the phases involved in the short-circuit by means of a first faulted -phase selection criterion comprising the calculation of an angular difference ($\delta_{criterion1}$) between positive sequence phasors and negative sequence phasors with respect to phase A of the electrical network.

In another particular embodiment, stage (c) for identifying the short-circuit by means of a second faulted phase selection criterion comprising a comparison stage between negative sequence currents and zero sequence currents (($\delta_{criterion2}$), wherein this second criterion is only applied for grounded short-circuits.

In a particular embodiment, the stage for detecting short-circuits comprises the detection of thresholds for an initial classification of short-circuits, such that the short-circuit conditions are measured depending on the relationship of the negative and zero sequence currents with respect to the positive sequence current.

In another particular embodiment, the first faulted phase selection criterion of the short-circuit and the second faulted phase selection criterion of the short-circuit comprises the definition of a plurality of sectors that correspond one-by-one with the types of short-circuit (depending on the phase involved - A, B, C and ground-), and wherein three zones are defined on the sector comprising the short-circuit: (i) a reference operation zone; (ii) a dead band between the reference operation zone and the adjacent zones; and (iii) a final operation zone that is obtained by subtracting the dead band zone from the reference operation zone.

In another particular embodiment, the directionality of the short-circuit is defined by the maximum peaks of the

scalar products $\Delta T_{AB}$, $\Delta T_{BC}$ and $\Delta T_{CA}$ such that the negative maximum peaks of the scalar products define the forward directionality, while the positive maximum peaks of the scalar products define the backward directionality.

Lastly, the invention claims an intelligent electronic device (IED) comprising at least one processor and one memory, wherein the memory stores a program or programs comprising a plurality of instructions which, when executed by the processor, make the intelligent electronic device execute the described method. As such, the method is implemented as *firmware* in said intelligent electronic device installed in an electrical distribution and/or transmission network, such as, by way of non-limiting example, a protection relay.

Throughout the description and in the claims, the word "comprises" and its variants are not intended to exclude other technical characteristics, components or steps. For those skilled in the art, other objects, advantages and characteristics of the invention may be deduced from both the invention and the practical use of the invention. The following examples and drawings are provided by way of illustration and are not intended to be limiting of the present invention. Furthermore, the invention covers all possible combinations of particular embodiments indicated herein.

**BRIEF DESCRIPTION OF THE DRAWINGS**

What follows is a very brief description of a series of drawings that aid in better understanding the invention, and which are expressly related to an embodiment of said invention that is illustrated by way of a non-limiting example of the same.

FIG. 1 shows a diagram of an example of the electrical distribution and/or transmission network wherein the protection method, object of the present invention, can be implemented.
FIG. 2 shows a block diagram of the initial classification stage of the type of short-circuit, taking note of the phases involved.
FIG. 3 shows a block diagram of the method of the present invention.
FIG. 4 shows a phasor diagram of criterion 1 for line to ground and line to line to ground short-circuits.
FIG. 5 shows a phasor diagram of criterion 1 for line to line short-circuits.
FIG. 6 shows a phasor diagram of criterion 2.
FIG. 7 shows the adaptive window.
FIG. 8 shows a diagram of the final decision making of the method.
FIG. 9 shows an oscillography for a short-circuit with current injection from a type 4 wind generator.

**DESCRIPTION OF A DETAILED EMBODIMENT OF THE INVENTION**

The method developed by the present invention is based on the principle that type 4 wind generators and photovoltaic generators behave similarly to synchronous generators during the moment of time immediately after the start of the short-circuit, with positive and negative sequence current injection. Beyond these first milliseconds after the start of the short-circuit, the faulted phase selectors and the directionality methods known in the prior state of the art and implemented in the protection relays normally used showed an incorrect performance.

Therefore, the initial hypothesis for the faulted phase selection is that the criteria for short-circuit selection used for synchronous generation can be valid if they are only applied to the data belonging to the moments after the start of the short-circuit and prior to the previously referred to "transition period". As a result, at this point a concept referred to as "valid window" is introduced, which is relevant for the proposed method. This valid window is the time frame that enables the general criteria used for the selection of the faulted phase of synchronous generators to correctly identify the faulted phase and directionality of the short-circuit, as well as to be immune to the transition periods and the final period of the current injection of the type 4 generators and/or photovoltaic generators during an asymmetrical short-circuit.

With regards to this valid window, the method of the invention meets the following characteristics: (a) identifies and indicates where the valid period starts to use the data and when this period ends; (b) automatically adapts the valid window to the different response times of the control systems for the renewable energy generators. Due to the fact that each control system may have programmed different control time constants and, therefore have different response times, it is very important for the correct operation of the method for this window to be adaptable over time (even self-adapting). Therefore, this valid window is referred to as "adaptive window" for the rest of the document.

The detection of short-circuits: initial classification

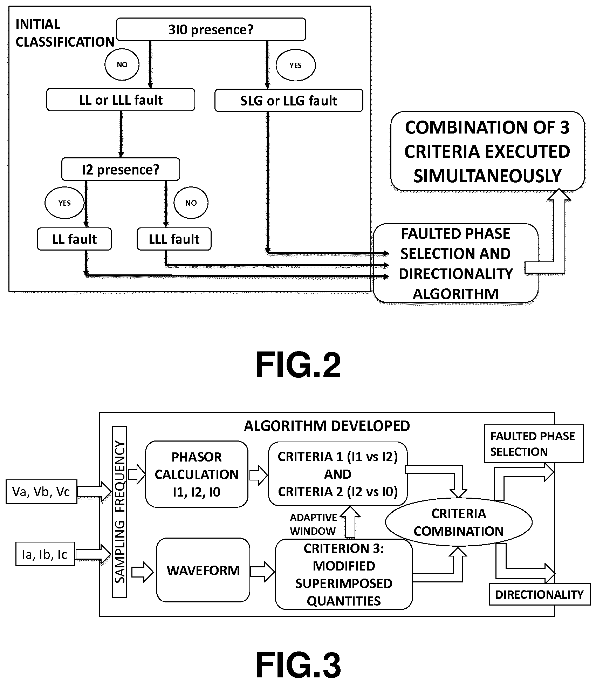

In order to activate the method of the invention, a minimum threshold is first required to identify the unbalanced conditions that cause a short-circuit in the electrical distribution and/or transmission network. Therefore, as an initial step of the proposed method, a threshold detector was implemented for the initial classification of short-circuits. The conditions are measured depending on the relationships of the negative and zero sequence currents with respect to the positive sequence current. The initial thresholds used for the classification of short-circuits are shown in figure 2 and these limits can be configured by the user. Initially, the limits are established at 10% of the positive sequence current for both the zero sequence current and the negative sequence current.

As can be seen in figure 2, depending on the presence of zero sequence current, a first classification can be made. The absence of zero sequence current leads to an identification loop of line to line or three-phase short-circuit. After this, the presence of negative sequence current enables the identification of whether the short-circuit is of the line to line (LL) type or whether the short-circuit is three-phase (LLL).

If zero sequence current arises, it is possible that the type of short-circuit is single phase to ground (SLG) or line-line to ground (LLG). Both short-circuits also have negative sequence current, which means that it is not possible to provide an additional separation taking into account only the negative and zero sequence currents.

The output of this initial classification is redirected to the selection of the faulted phase and the directionality thereof. As explained in the present specification, the method uses three criteria simultaneously: the first criterion and the second criterion are based on the phasor angles, while the third criterion is based on a modification of the superimposed quantities method. Figure 3 shows the combination of different criteria used in the method. This combination of criteria is explained throughout the present specification.

Criterion 1. Positive compared to negative sequence currents

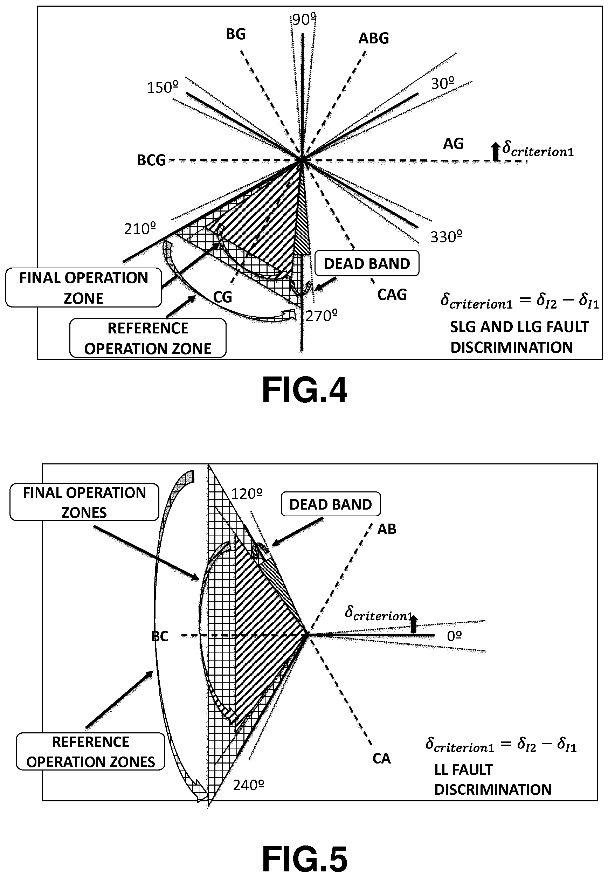

The fast Fourier transform (FFT) with 32 samples per cycle has been used to calculate the phasor angles of the positive and negative sequence currents in the RTDS model on which the invention has been implemented (https://www.rtds.com). Figure 4, figure 5 and figure 6 show the sectors for the identification of the faulted phase for each type of short-circuit (phase to ground -AG, BG, CG-, phase to phase -AB, BC, CA-, phase to phase to ground-ABG, BCG, CAG-).

Once the initial classification has been applied based on the threshold of the zero sequence current with respect to the positive sequence current, the method calculates the difference between the positive sequence phasors and negative sequence phasors (with respect to phase A). The method compares this angle difference, $\delta_{criterion1}$, to the sectors observed in figure 4 to obtain the faulted phase selection. By way of example, the figure indicates the short-circuit CG (line C to ground).

The method defines three zones and these zones are applicable for all the other sectors: (i) a reference operation zone, wherein it can be seen that in the case of the short-circuit of line C to ground (CG), the operation of the reference zone starts at 210 degrees and ends at 270 degrees; (ii) dead band, adjustable by the user between the zones adjacent to the reference operation zone to prevent incorrect activations due to sporadic incursions of the angle into adjacent zones. However, during the tests, this dead band was established at zero degrees; and (iii) a final operation zone that is obtained by subtracting the dead band zone from the reference operation zone. In the event that the dead band is established at zero degrees, the final and reference operation zone coincide.

The same analysis can be applied to the rest of the zones: the AG (line A to ground) sector goes from 330° to 30°, the ABG (lines A-B to ground) sector from 30° to 90°, the BG (line B ground) sector from 90° to 150°, the BCG (lines B-C to ground) sector from 150° to 210° and CAG (lines C-A to ground) sector from 270° to 330°.

In the event that the initial classification establishes that zero sequence current is not present, the conditions of criterion 1 that are applied are based on figure 5 to correctly identify the type of short-circuit between the different line to line short-circuits, isolated from ground. The AB sector starts at 0° and ends at 120°, the BC sector starts at 120° and ends at 240° and the CA sector starts at 240° and ends at 360°.

Criterion 2. Negative sequence currents compared to zero sequence currents

The second criterion is based on the comparison between the negative and zero sequence currents. The separation of isolated short-circuits and ground short-circuits can be done based on the zero sequence and negative sequence thresholds, as explained above. However, criterion 1 described for ground short-circuits have a particular feature: due to the proximity between adjacent sectors, it is possible that, for example, in the case of an AG short-circuit, there is an activation during very short periods of time of the adjacent ABG or CAG sectors, due to possible delays in the calculation of the phasors.

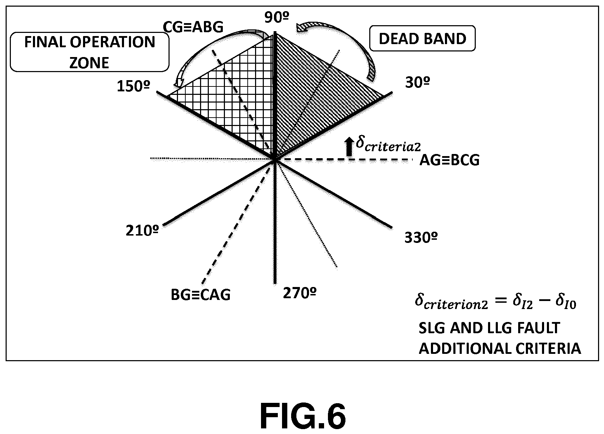

Therefore, in order to increase the robustness of the method, a second criterion is also implemented based on the comparison between zero sequence and negative sequence ($\delta_{criterion2}$). Although this criterion is only valid for grounded short-circuits, it provides the advantage that the adjacent sectors seen in criterion 1 now, in criterion 2 are delayed 120 degrees. This delay can be seen in figure 6.

In order to illustrate this difference, the AG short-circuit can serve as an example. In criterion 1, ABG and CAG are the adjacent sectors. However, in criterion 2, ABG is displaced 120° with respect to AG, while CAG is delayed 120° with respect to AG. Therefore, this criterion enables the method to carry out an additional comparison in the event of doubt due to incorrect sector activations.

As can be seen in figure 6, the AG and BCG short-circuits share the sector comprised between 330° and 30°, the CG and ABG short-circuits share the sector comprised between 90° and 150° and, lastly, the BG and CAG short-circuits share the sector comprised between 210° and 270°. In this case, the sectors 30° to 90°, 150° to 210° and 270° to 330° are unused sectors and are considered dead band sectors as can be seen in figure 6.

Adaptive window applied to the criteria 1 and 2

As indicated above, the problems that the present invention resolves are related to the transition period of the current injection and to the balanced injection period during a short-circuit and which come from the type 4 wind and photovoltaic generators. This transition period is especially problematic for the faulted phase selector and the directionality methods implemented in the state of the art. As a result, these problems affect the correct operation of the distance protection, one of the most used protection functions in electrical transmission, sub-transmission and distribution systems. Additionally, the directional current functions are widely used in electrical distribution networks, which functions are affected by the faulted phase detection and directionality problems. Due to these problems, it is important to prevent the algorithms from taking data of current during these transition and balanced current injection periods, taking valid data from the start of the short-circuit to the moment preceding the transition period. This window was previously defined as "valid window" or "adaptive window". Moreover, it is very important for the method to be independent from the response time of the renewable energy generator. It has been observed that photovoltaic generators, due to the fact that the generator thereof is not based on rotating elements, react much quicker when there is a short-circuit than the type 4 wind generator carrying out, in this way, a quicker suppression of the negative sequence current.

Therefore, the aim of this "valid window" is not to be affected by different response times of the generator controls. Therefore, this "valid window" has been renamed as "adaptable window" or "adaptive window", since it must be capable of automatically adapting to different response times of the control systems of renewable energy generators.

The superimposed quantity theory has been readapted to be used for this aim within the developed method. The waveforms from the output of the definition of scalar products contain the information about when the method must consider the information from criteria 1 and 2 valid.

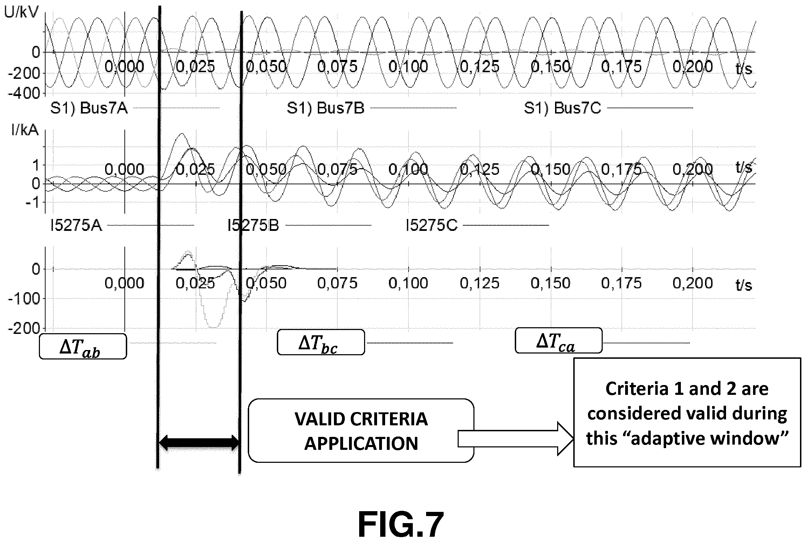

The method of the adaptive window uses the scalar products $\Delta T_{AB}$, $\Delta T_{BC}$ and $\Delta T_{CA}$ of the waveforms observed in figure 7. By means of counting the maximums and minimums of said waveforms, the method defines this adaptive window such that criteria 1 and 2 shall be considered valid only during this period of time. Specifically, in a non-limiting example, the initiation of the window is marked by the detection of the first maximum or minimum and the end of the window is marked by the detection of the third maximum or minimum. The number of maximums and minimums that defines the end of the adaptive window has been proposed as a setting adjusted by the user, as can many other parameters in an intelligent electronic device or protection relay be adjusted. The setting referred to herein has operated correctly in the method validation tests carried out. The use of the adaptive window prevents incorrect activation problems due to the transition period and the final period in which the type 4 wind and photovoltaic generators provide the symmetrical current injection even in cases of asymmetrical short-circuits.

At this point it is interesting to explain the behaviour of the superimposed quantities theory explained in [G. Benmouyal y J. Roberts, «Superimposed Quantities: Their True Nature and Application in Relays,» of the 26th Annual Western Protective Relay Conference, Spokane, 1999]. As such, based on the theory described in this algorithm, it is possible to define an incremental impedance according to the following expression, where all the quantities in this equation are phasors:

$$Z_R = \frac{\text{Post Fault } V_R - \text{Pre Fault } V_R}{\text{Post Fault } I_R - \text{Pre Fault } I_R} = \frac{\Delta V_R}{\Delta I_R} = -Z_{S1}$$

The above equation implies that the incremental impedance seen from the relay (subscript "R") is equivalent to the positive sequence source impedance. This formula can also be represented as:

$$\frac{\Delta V_R}{\Delta I_R \cdot (-Z_{S1})} = 1$$

(magnitudes in upper case indicate phasor values while magnitudes in lower case indicate instant values)

This means that, during a short-circuit, the magnitude and the phase of the incremental voltage waveform (or phasor) are equal to the magnitude and the phase of the incremental current waveform (or phasor) multiplied by the negative of the impedance of the source behind the protection relay.

The superimposed quantity theory defines an element referred to as "scalar product", defined as:

$$\text{Scalar Product} \rightarrow \text{real}\left(\Delta V_R \cdot \text{conj}\left(\Delta I_R \cdot (-Z_{S1})\right)\right) = \Delta v_R \cdot \Delta i_R \cdot z_{s1} \cdot \cos\theta \rightarrow \Delta v_R \cdot \Delta i_R \cdot \cos\theta$$

Wherein $z_{s1}$ is the value of the impedance, which is always positive and therefore does not affect the sign of the scalar product, which means that it can be reduced to the unit without the aim of using this product being altered. $\theta$ is an angle that represents any phase angle misalignment that may exist in the representation of the origin phase angle. As the angle $\theta$ is normally about 0°, the factor $\cos\theta$ is close to the unit, having a positive sign, and therefore not influencing the sign of the result.

A negative value of this scalar product indicates forward directionality, while a positive value of this parameter indicates backward directionality.

A scalar product (referred to in the following equations as $\Delta T_{\text{Line-Line}}$) can be defined by phase, taking into account the line voltage and current measurements, such that a set of three scalar products in total are defined. The three scalar products defined by phase are:

$$\Delta T_{AB} = \text{real}\left(\Delta V_{AB} \cdot \text{conj}\left(-\Delta I_{Ac}\right)\right)$$

$$\Delta T_{BC} = \text{real}\left(\Delta V_{BC} \cdot \text{conj}\left(-\Delta I_{Bc}\right)\right)$$

$$\Delta T_{CA} = \text{real}\left(\Delta V_{CA} \cdot \text{conj}\left(-\Delta I_{Cc}\right)\right)$$

Depending on the value and sign obtained for each scalar product, it is possible to classify the fault type. Table 1 shows the values, in relative values, of each scalar product for different types of short-circuit for the current injection from traditional synchronous generation:

Table 1

| Short-circuit | $\Delta$tab | $\Delta$tbc | $\Delta$tca |
|---|---|---|---|
| A-G | $\Delta$tab | 0 | $\Delta$tab |
| B-G | $\Delta$tab | $\Delta$tab | 0 |
| C-G | 0 | $\Delta$tbc | $\Delta$tbc |
| A-B, A-B-G | $\Delta$tab | 0.25 • $\Delta$tab | 0.25 • $\Delta$tab |
| B-C, B-C-G | 0.25 • $\Delta$tbc | $\Delta$tbc | 0.25 • $\Delta$tbc |
| C-A, C-A-G | 0.25 • $\Delta$tca | 0.25 • $\Delta$tca | $\Delta$tca |
| A-B-C | $\Delta$tab | $\Delta$tab | $\Delta$tab |

Criterion 3. Adaptation of the superimposed quantity theory.

Criteria 1 and 2 are based on the theory of positive, negative and zero sequence current phasors, executed jointly with the adaptive window required to guarantee the correct behaviour of the method. In addition to this, and again using the analysed superimposed quantities theory, a new criterion has been defined to distinguish between the different types of short-circuits depending on the large number of tests carried out on the type 4 wind generator and on the photovoltaic generator. Therefore, a value criterion, which can even be a configuration adjustable by the user, has been defined in table 2:

Table 2

| Type of short-circuit | $\Delta T_{AB}$ | $\Delta T_{BC}$ | $\Delta T_{CA}$ |
|---|---|---|---|
| AG | $\Delta T_{AB}$ | $<0.1 \cdot \Delta T_{AB}$ | *Not Considered* |
| BG | *Not Considered* | $\Delta T_{BC}$ | $<0.1 \cdot \Delta T_{BC}$ |

(continued)

| Type of short-circuit | $\Delta T_{AB}$ | $\Delta T_{BC}$ | $\Delta T_{CA}$ |
|---|---|---|---|
| CG | $<0.1 \cdot \Delta T_{CA}$ | *Not Considered* | $\Delta T_{CA}$ |
| AB, ABG | $\Delta T_{AB}$ | $>0.25 \cdot \Delta T_{AB}$ $<0.75 \cdot \Delta T_{AB}$ | *Not Considered* |
| BC, BCG | *Not Considered* | $\Delta T_{BC}$ | $>0.25 \cdot \Delta T_{BC}$ $<0.75 \cdot \Delta T_{BC}$ |
| CA, CAG | $>0.25 \cdot \Delta T_{CA}$ $<0.75 \cdot \Delta T_{CA}$ | *Not Considered* | $\Delta T_{CA}$ |

The method uses the waveform provided by each scalar product to provide the faulted phase selection according to criterion 3. The relative values of $\Delta T_{AB}$, $\Delta T_{BC}$ and $\Delta T_{CA}$ were taken based on the results obtained during the tests and could be a parameter configurable by user entry for the method.

Directionality

Criteria 1 and 2 based on phasors are not affected by the directionality of the short-circuit. The directionality of the short-circuit affects the positive, negative and zero sequence current in the same way. 180 degrees of difference would be applied to the three sequences between backward and forward short-circuits. Therefore, given that these two criteria are based on the difference between the angles of the positive and negative sequence (criterion 1) and the negative and zero sequence (criterion 2), the directionality does not affect the behaviour of this faulted phase selection principle. However, this fact means that these two criteria cannot provide information on the directionality of the short-circuit. Therefore, for this aim, the superimposed quantities theory has been used applied to directionality, which manages the values of the scalar products already defined and used in criterion 3 for faulted phase selection. The maximum peaks and the sign of these scalar products define directionality. The maximum negative peaks of the scalar products provide information on forward directionality, while the maximum positive peaks of the scalar products provide information on the backward directionality.

Final decision

The use of three criteria that are executed in parallel and are based on different protection theories (criteria 1 and 2 are based on phasor theory alongside the appropriate enablement of the adaptive window, and criterion 3 is based on the modified superimposed quantity theory) provides robustness to the final decision of the method.

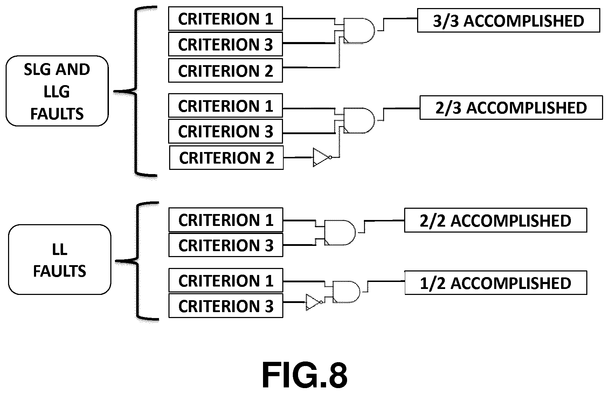

The logic of the final decision is shown in figure 8. For the line to ground short-circuits and line to line short-circuits, the method implements the three criteria. In order to obtain an output, at least criterion 1 and criterion 3 must be met. Criteria 1 and 3 were selected in this case because they work with different protection principles, which provides greater robustness to the final decision. In figure 8, 2/3 criteria would be met (that is 2 out of 3 criteria) and the corresponding type of short-circuit would activate in the oscillography (for example, for a single phase short-circuit of phase B to ground: BG_2/3). In addition, if the three criteria are simultaneously met, the criteria with the 3/3 label corresponding to the faulted phase selector loop are activated (continuing with the above example, if the short-circuit is phase B to ground, the activated digital signal is BG_3/3).

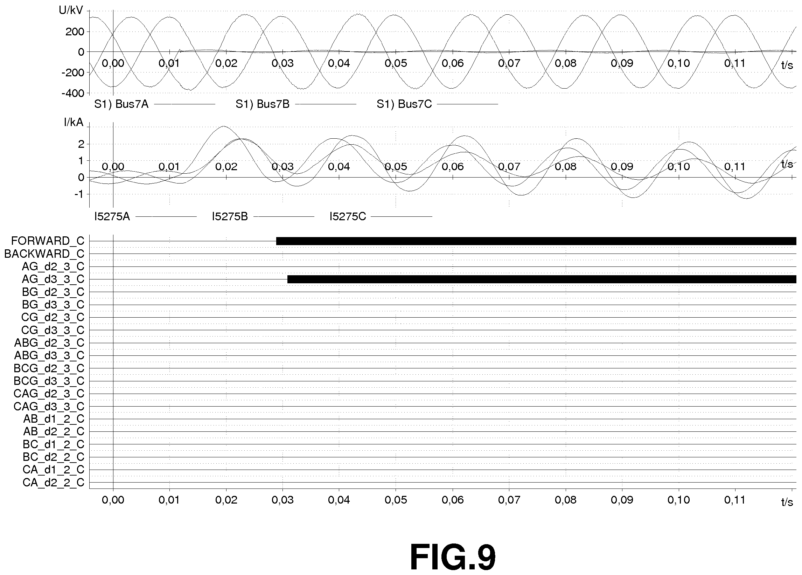

An example of oscillography can be seen by way of reference in figure 9. Figure 9 shows an example of the behaviour of the type 4 wind generator during a short-circuit of phase A to ground. The voltages of the phases A, B and C, named "Bus7A", "Bus7B" and "Bus7C", can be seen. The currents of phases A, B and C, named "I5275A", "I5275B" and "I5275C" can also be seen. These currents represent the response of the type 4 wind generator during a short-circuit of phase A to ground. Then, the signals provided by the algorithm developed with the aim of correctly selecting the phase or phases affected by the short-circuit and the directionality are shown. The signal "FORWARD_C" refers to the existence of a "forward" short-circuit, while the "BACKWARD_C" signal refers to a "backward" short-circuit. The signals "AG_d2_3_C" (short-circuit between phase A and ground meeting 2 of the 3 criteria), "AG_d3_3_C" (short-circuit between phase A and ground meeting 3 out of the 3 criteria) and successively up to "CA_d2_2_C" (short-circuit between phases C and A, isolated from ground, meeting 2 out of the 2 criteria) refer to the different types of possible short-circuits.

In Figure 9, the activation of each of these signals indicates the identification of the faulted phases and the directionality thereof.

In the example shown in Figure 9, a "forward" short-circuit is applied between phase A and ground. The algorithm correctly identifies the short-circuit given that it activates the "FORWARD_C" and "AG_3_3_C".

In the case of a hypothetical activation of different faulted phase selector loops (for example, in a case in which AG_2 / 3 and ABG_3 / 3 is activated), the faulted phase selection loop with the greatest number of met criteria would be the loop selected by the intelligent electronic device (for example, a protection relay) that implements the algorithm.

Therefore, in this case the ABG loop would prevail over AG.

A similar explanation can be applied to the line to line short-circuits. In this case, given that zero sequence current is not present, only two criteria are used: criterion 1 and criterion 3. If criterion 1 is met but criterion 3 is not met, then the label 1/2 is activated for the selected faulted phase selector loop (for example, for a line to line short-circuit between phases A and B, the activated digital signal would be AB_1/2). Furthermore, if both criteria are met, then the label 2/2 is activated for the selected faulted phase selector loop (continuing with the example, for a line to line short-circuit between phases A and B, the activated digital signal would be AB_2/2).

In the case of the activation of different faulted phase selector loops (for example, AB_1/2 and BC_2/2), the faulted phase selection loop with the greatest number of met criteria would be the loop selected. Therefore, in this case the BC loop would prevail over AB. In this way, the intelligent electronic device (for example, a protection relay) that implements the described algorithm would select the BC loop.

**Claims**

1. A protection method of an electrical distribution and/or transmission network against short-circuits comprising three lines or phases (A, B, C) and a neutral or ground line (G) against short-circuits with current injection by at least one electric generator, with a current control system, selected from among a wind generator or a photovoltaic generator; and wherein the method comprises, at least:

   (a) a stage of detecting short-circuits for an initial classification of the short-circuit as line to ground, line to line and line-line to ground;
   **(b)** a stage of identifying the faulted phase;
   **(c)** selecting the faulted phase or phases; and
   **(d)** a classification stage of the faulted phase depending on the waveforms

   of scalar products $\Delta T_{AB}$, $\Delta T_{BC}$ and $\Delta T_{CA}$, said scalar products being defined by voltage and current in the lines or phases (A, B, C);
   the method **characterized in that** the stage of identifying the faulted phase (b) and the stage of selecting the faulted phase or phases (c) are only valid during a period of time defined by an adaptive window that is temporarily delimited between a first maximum or minimum and a last maximum or minimum of the waveforms provided by the scalar products $\Delta T_{AB}$, $\Delta T_{BC}$ and $\Delta T_{CA}$ being the last maximum or minimum adjustable with a setting of number of maximums and minimums, and being the duration of the adaptative window comprised between the moment of time in which the start of the short-circuit is detected and the moment of time in which the current control system starts to actuate eliminating the negative sequence current, said time interval being the interval in which the electric generator behaves synchronously with the electrical distribution and/or the transmission network; and wherein, in addition, said window is automatically adaptable to the time response of the current control system of the at least one electric generator.

2. The method according to claim 1, wherein stage (b) for selecting the faulted phase by means of a first selection criterion of faulted phase or phases comprises the calculation of an angular difference ($\delta_{criterion1}$) between the positive sequence phasors and the negative sequence phasor of a phase (A, B, C) of the electrical distribution and/or transmission network.

3. The method according to one of claims 1 or 2, wherein stage (c) for selecting the faulted phase or phases comprises a comparison stage between negative sequence currents and zero sequence currents ($\delta_{criterion2}$), wherein this second criterion is only applied for ground short-circuits.

4. The method according to any one of the preceding claims, wherein the stage for detecting short-circuits comprises the detection of thresholds for an initial classification of faulted phases, such that the short-circuit conditions are measured depending on the relationship of the negative and zero sequence currents with respect to the positive sequence current.

5. The method according to any one of the preceding claims, wherein the first selection criterion of faulted phase and the second selection criterion of faulted phase comprises the definition of a plurality of sectors that correspond one-by-one with the types of short-circuit, and wherein three zones are defined on the sector comprising the short-circuit: (i) a reference operation zone; (ii) a dead band between the reference operation zone and the adjacent zones; and (iii) a final operation zone that is obtained by subtracting the dead band zone from the reference operation zone.

**6.** The method according to any one of the preceding claims, wherein the directionality of the short-circuit is defined by the maximum peaks of the scalar products $\Delta T_{AB}$, $\Delta T_{BC}$ and $\Delta T_{CA}$ such that the negative maximum peaks of the scalar products define the forwards directionality, while the positive maximum peaks of the scalar products define the backwards directionality.

**7.** An intelligent electronic device comprising at least one processor and one memory, wherein the memory stores a program or programs comprising a plurality of instructions which, when executed by the processor, make the intelligent electronic device execute the method of claims 1 to 6.

**Patentansprüche**

**1.** Schutzverfahren eines elektrischen Verteilungs- und/oder Übertragungsnetzwerks vor Kurzschlüssen, das drei Leitungen oder Phasen (A, B, C) und einen Null- oder Masseleiter (G) umfasst, vor Kurzschlüssen mit Strom injektion durch mindestens einen Stromgenerator mit einem Stromsteuersystem, der aus einem Windgenerator oder einem Fotovoltaikgenerator ausgewählt ist; und wobei das Verfahren mindestens Folgendes umfasst:

(a) eine Stufe des Erfassens von Kurzschlüssen für eine anfängliche Klassifizierung der Kurzschlüsse als Leitung zu Masse, Leitung zu Leitung und Leitung-Leitung-zu Masse;
(b) eine Stufe des Identifizierens der fehlerbehafteten Phase;
(c) Auswählen der fehlerbehafteten Phase oder Phasen; und
(d) eine Klassifizierungsstufe der fehlerbehafteten Phase in Abhängigkeit von den Wellenformen skalarer Produkte $\Delta T_{AB}$, $\Delta T_{BC}$ und $\Delta T_{CA}$, wobei die skalaren Produkte durch Spannung und Strom in den Leitungen oder Phasen (A, B, C) definiert sind;

Verfahren **dadurch gekennzeichnet, dass** die Stufe des Identifizierens der fehlerbehafteten Phase (b) und die Stufe des Auswählens der fehlerhaften Phase oder Phasen (c) nur während einer Zeitspanne gültig sind, die von einem adaptiven Fenster definiert wird, das vorübergehend zwischen einem ersten Maximum oder Minimum und einem letzten Maximum oder Minimum der Wellenformen abgegrenzt wird, die von den skalaren Produkten $\Delta T_{AB}$ bereitgestellt werden, wobei $\Delta T_{BC}$ und $\Delta T_{CA}$ das letzte Maximum oder Minimum sind, das mit einer Einstellung der Anzahl von Maxima und Minima einstellbar ist, und die Dauer des adaptiven Fensters zwischen dem Zeitpunkt, in dem der Start des Kurzschlusses erfasst wird, und dem Zeitpunkt, in dem das Stromsteuersystem startet, das Eliminieren des Gegenstroms auszulösen, ist, wobei das Zeitintervall das Intervall ist, in dem sich der elektrische Generator synchron zu der Stromverteilungs- und/oder dem Übertragungsnetzwerk verhält; und wobei zusätzlich das Fenster automatisch an das Zeitverhalten des Stromsteuersystems des mindestens einen Stromgenerators anpassbar ist.

**2.** Verfahren nach Anspruch 1, wobei die Stufe (b) zum Auswählen der fehlerbehafteten Phase mittels eines ersten Auswahlkriteriums fehlerbehafteter Phase oder Phasen die Berechnung einer Winkeldifferenz ($\delta_{Kriterium1}$) zwischen den Zeigern positiver Sequenz und Zeigern negativer Sequenz einer Phase (A, B, C) des Stromverteilungs- und/oder Übertragungsnetzwerks umfasst.

**3.** Verfahren nach einem der Ansprüche 1 oder 2, wobei die Stufe (c) zum Auswählen der fehlerbehafteten Phase oder Phasen eine Vergleichsstufe zwischen negativen Sequenzströmen und Nullsequenzströmen ($\delta_{Kriterium2}$) umfasst, wobei dieses zweite Kriterium nur für Massekurzschlüsse angewandt wird.

**4.** Verfahren nach einem der vorstehenden Ansprüche, wobei die Stufe zum Erfassen von Kurzschlüssen das Erfassen von Schwellenwerten für eine anfängliche Klassifizierung fehlerbehafteter Phasen derart umfasst, dass die Kurzschlussbedingungen in Abhängigkeit von der Beziehung des negativen und des Nullsequenzstroms in Bezug auf den positiven Sequenzstrom gemessen werden.

**5.** Verfahren nach einem der vorstehenden Ansprüche, wobei das erste Auswahlkriterium einer fehlerbehafteten Phase und das zweite Auswahlkriterium einer fehlerbehafteten Phase die Definition einer Vielzahl von Sektoren umfasst, die nacheinander den Kurzschlusstypen entsprechen, und wobei drei Zonen auf dem Sektor, der den Kurzschluss umfasst, definiert werden: (i) eine Referenzbetriebszone; (ii) ein Totband zwischen der Referenzbetriebszone und den angrenzenden Zonen; und (iii) eine abschließende Betriebszone, die durch Subtrahieren der Totbandzone von der Referenzbetriebszone erhalten wird.

**6.** Verfahren nach einem der vorstehenden Ansprüche, wobei die Richtwirkung des Kurzschlusses von den maximalen Spitzen der skalaren Produkte $\Delta T_{AB}$, $\Delta T_{BC}$ und $\Delta T_{CA}$ derart definiert wird, dass die negativen maximalen Spitzen der skalaren Produkte die Vorwärtsrichtwirkung definieren, während die positiven maximalen Spitzen der skalaren Produkte die Rückwärtsrichtwirkung definieren.

**7.** Intelligente elektronische Vorrichtung, die mindestens einen Prozessor und einen Speicher umfasst, wobei der Speicher ein Programm oder Programme speichert, das eine Vielzahl von Anweisungen umfasst, die, wenn sie von dem Prozessor ausgeführt werden, die intelligente elektronische Vorrichtung das Verfahren der Ansprüche 1 bis 6 ausführen lassen.

**Revendications**

**1.** Procédé de protection d'un réseau de distribution et/ou de transmission électrique contre des courts-circuits comprenant trois lignes ou phases (A, B, C) et une ligne de neutre ou de masse (G) contre des courts-circuits avec injection de courant par au moins un générateur électrique, avec un système de contrôle de courant, sélectionné parmi un générateur éolien ou un générateur photovoltaïque ; et dans lequel le procédé comprend, au moins :

  **(a)** une étape de détection de courts-circuits pour une classification initiale du court-circuit en tant que ligne à masse, ligne à ligne et ligne-ligne à masse ;
  **(b)** une étape d'identification de la phase en défaut ;
  **(c)** la sélection de la phase ou des phases en défaut ; et
  **(d)** une étape de classification de la phase en défaut en fonction des formes d'onde de produits scalaires $\Delta T_{AB}$, $\Delta T_{BC}$ et $\Delta T_{CA}$, lesdits produits scalaires étant définis par une tension et un courant dans les lignes ou phases (A, B, C) ;

  le procédé **caractérisé en ce que** l'étape d'identification de la phase en défaut (b) et l'étape de sélection de la phase ou des phases en défaut (c) sont valables seulement pendant une période de temps définie par une fenêtre adaptative qui est temporairement délimitée entre un premier maximum ou minimum et un dernier maximum ou minimum des formes d'onde fournies par les produits scalaires $\Delta T_{AB}$, $\Delta T_{BC}$ et $\Delta T_{CA}$ étant le dernier maximum ou minimum ajustable avec un réglage de nombre de maximums et minimums, et étant la durée de la fenêtre adaptative comprise entre le moment de temps où le commencement du court-circuit est détecté et le moment de temps où le système de contrôle de courant commence à s'actionner en éliminant le courant de séquence négative, ledit intervalle de temps étant l'intervalle où le générateur électrique se comporte de manière synchrone avec le réseau de distribution et/ou de transmission électrique ; et dans lequel, en complément, ladite fenêtre est automatiquement adaptable à la réponse temporelle du système de contrôle de courant de l'au moins un générateur électrique.

**2.** Procédé selon la revendication 1, dans lequel l'étape (b) de sélection de la phase en défaut au moyen d'un premier critère de sélection de phase ou phases en défaut comprend le calcul d'une différence angulaire ($\delta_{criterion1}$) entre les phaseurs de séquence positive et le phaseur de séquence négative d'une phase (A, B, C) du réseau de distribution et/ou de transmission électrique.

**3.** Procédé selon l'une quelconque des revendications 1 ou 2, dans lequel l'étape (c) de sélection de la phase ou des phases en défaut comprend une étape de comparaison entre des courants de séquence négative et des courants de séquence zéro ($\delta_{criterion2}$), dans lequel ce second critère est appliqué seulement pour les courts-circuits de masse.

**4.** Procédé selon l'une quelconque des revendications précédentes, dans lequel l'étape de détection de courts-circuits comprend la détection de seuils pour une classification initiale de phases en défaut, de telle sorte que les conditions de court-circuit sont mesurées en fonction de la relation des courants de séquence négative et zéro par rapport au courant de séquence positive.

**5.** Procédé selon l'une quelconque des revendications précédentes, dans lequel le premier critère de sélection de phase en défaut et le second critère de sélection de phase en défaut comprend la définition d'une pluralité de secteurs qui correspondent un par un aux types de court-circuit, et dans lequel trois zones sont définies sur le secteur comprenant le court-circuit : (i) une zone d'opération de référence ; (ii) une bande morte entre la zone d'opération de référence et les zones adjacentes ; et (iii) une zone d'opération finale qui est obtenue par soustraction de la zone de bande morte de la zone d'opération de référence.

**6.** Procédé selon l'une quelconque des revendications précédentes, dans lequel la directionnalité du court-circuit est définie par les pics maximums des produits scalaires $\Delta T_{AB}$, $\Delta T_{AC}$ et $\Delta T_{CA}$ de telle sorte que les pics maximums négatifs des produits scalaires définissent la directionnalité vers l'avant, tandis que les pics maximums positifs des produits scalaires définissent la directionnalité vers l'arrière.

**7.** Dispositif électronique intelligent comprenant au moins un processeur et une mémoire, dans lequel la mémoire stocke un programme ou des programmes comprenant une pluralité d'instructions qui, lorsqu'elles sont exécutées par le processeur, mènent le dispositif électronique intelligent à exécuter le procédé des revendications 1 à 6.

**FIG.1**

**FIG.2**

**FIG.3**

**FIG.4**

**FIG.5**

FIG.6

FIG.7

FIG.8

**FIG.9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007086944 A
- US 2003011352 A
- US 647791 A
- US 200409317 B
- US 2005047043 A
- US 2007070565 A
- US 2003223171 A
- US 6256592 B
- US 2006077605 A
- US 6518767 B
- US 2003086222 A
- US 2013088239 A

**Non-patent literature cited in the description**

- **G. BENMOUYAL ; J. ROBERTS.** Superimposed Quantities: Their True Nature and Application in Relays. *26th Annual Western Protective Relay Conference, Spokane,* 1999